# EUROPÄISCHE PATENTANMELDUNG

(11) **EP 1 309 061 A2**
(43) Veröffentlichungstag der Anmeldung: **07.05.2003**
(21) Anmeldenummer: 02021292.4
(22) Anmeldetag: 19.09.2002
(51) Int. Cl.: H02H 9/06

(54) **Multifunktionale Überspannungs-Schutzeinrichtung**

(30) Priorität: 06.11.2001 DE 10154344; 16.03.2002 DE 10211796
(71) Anmelder: DEHN + SÖHNE GMBH + CO KG, D-92318 Neumarkt/Opf (DE)
(72) Erfinder: König, Raimund, 92369 Sengenthal (DE); Hohenwaldt, Wilhelm, 92318 Neumarkt (DE)
(74) Vertreter: Kruspig, Volkmar, Dipl.-Ing.

(57) **Zusammenfassung**

Die Erfindung betrifft eine multifunktionale Überspannungs-Schutzeinrichtung, insbesondere für Blitzschutz-Potentialausgleichs- und Erdungssysteme mit Kurzschluß- und/oder Strombegrenzungsmitteln. Erfindungsgemäß ist eine Selektionsbaugruppe vorgesehen, die die zwischen dem zu schützenden Systemteil und Erde auftretenden Überspannungsereignisse nach ihrem zeitlichen Verlauf sowie Höhe der jeweiligen Spannungswerte überwacht und bewertet, um dynamische/transiente einerseits und statische/stationäre, auch periodisch wiederkehrende, Ereignisse andererseits zu erkennen, wobei je nach Ereignis ein dynamischer Kurzschlußschalter oder statischer Kurzschlußschalter, gegebenenfalls diese nacheinander, aktiviert werden.

## Beschreibung

Die Erfindung betrifft eine multifunktionale Überspannungs-Schutzeinrichtung, insbesondere für Blitzschutz-Potentialausgleichs- und Erdungssysteme mit Kurzschlußund/oder Strombegrenzungsmitteln, gemäß Oberbegriff des Patentanspruchs 1.

Gemäß den Maßnahmen des Blitzschutz-Potentialausgleichs werden Systemteile bzw. Anlagenteile mit unterschiedlichen Potentialen oder solchen, die im Beeinflussungsfall unterschiedliche Potentiale annehmen können, direkt oder indirekt elektrisch miteinander verbunden.
Bei einer direkten Verbindung werden alle innerhalb eines zu schützenden Volumens befindlichen metallischen Konstruktionen untereinander verschaltet und mit der örtlichen Erde bzw. Erdungsanlage kontaktiert. Die indirekte Verbindung betrifft zum einen die Einbindung der aktiven Leiter des Systems über Überspannungs-Schutzgeräte und zum anderen elektrisch leitfähige Systemteile, die aus verschiedenen Gründen nicht auf direktem Weg verbunden und damit geerdet werden dürfen. Solche Systemteile, die nicht unmittelbar mit dem Gebäude-Potentialausgleich verbindbar sind, sind beispielsweise geschirmte Leitungen, deren Kabelschirm aus übertragungstechnischen Gründen nicht am Gebäudeeintritt mit der örtlichen Erdungsanlage verbunden werden darf; Systeme der Gas- und Wasserversorgung, die z.B. mit einer kathodischen Korrosionsschutzanlage betrieben werden und dadurch über Isolierstücke von dem geerdeten Teil der Anlage getrennt sein müssen, aber auch unterschiedliche Erdungsanlagen sowie erdfühlig verlegte Bandeisen oder Kabelschirme, die aus Beeinflussungs- oder Korrosionsschutzgründen nicht elektrisch verbunden werden dürfen.

Oben genannte Systemteile werden nach dem Stand der Blitzschutztechnik über Trennfunkenstrecken mit der Erdungsanlage bzw. untereinander verbunden. Die resultierende Verbindung besteht damit lediglich für die Dauer der Beeinflussung, z.B. durch blitzbedingte Überspannungen. Nach dem Abklingen der Überspannung wird diese Verbindung aufgehoben und somit die gewünschte Trennung wieder hergestellt.
Die Kopplung wird hierbei nur vorgenommen, wenn das Blitzereignis eine Potentialdifferenz zwischen den getrennten Systemen hervorruft, die ansonsten Isolationsschäden oder sogenannte zündende Störlichtbögen verursachen würde. Durch das Ansprechen der Trennfunkenstrecke wird quasi ein vorübergehender Potentialausgleich geschaffen, der Isolationsschäden vermeidet und undefinierte Überschläge und die damit auftretenden zündenden Lichtbögen verhindert. Gleichzeitig übernimmt die eingesetzte Trennfunkenstrecke einen Teilstoßstrom, der aus dem Ableitvorgang resultiert. Hierdurch werden nachfolgende Anlagenteile nur zu einem bestimmten, relativ geringen Anteil mit Blitzstoßströmen belastet.

Unabhängig von einem Blitzereignis können die erwähnten System- oder Anlagenteile ein sogenanntes Fremdpotential führen, das entweder von einer regulären Quelle, z.B. aus dem kathodischen Korrosionsschutz, oder von einer Störquelle, z.B. Beeinflussungen aus Bahnanlagen oder Hochspannungsleitungen erzeugt wird. Insbesondere Fremdpotential aus Störquellen, das als Fremdspannung auftritt, kann an einer offenen Erdung, z.B. über eine Trennfunkenstrecke, eine dauerhafte oder vorübergehende unerwünschte Berührungsspannung erzeugen. Zur Begrenzung derartiger Vorgänge ist eine Funkenstrecke wegen ihres Ansprech- und Ableitverhaltens nicht geeignet. Es liegt nämlich die Ansprechspannung im Regelfall oberhalb der zulässigen Spannungswerte für Berührungsspannungen.

Gemäß den einschlägigen Normen sind bei Überschreiten eines bestimmten Spannungswerts einer möglichen Berührungsspannung Maßnahmen zu treffen, um eine direkte oder indirekte Berührung durch Personen zu verhindern. Es sind also auch bei Anwendung einer Fremdspannung führenden offenen Erdung über eine Trennfunkenstrecke z.B. der eines in ein Gebäude eingeführten, ungeerdeten Kabelschirms, die Belange des Berührungsschutzes zu berücksichtigen. Hier besteht in einigen Fällen die Möglichkeit, den Bereich der offenen Erdung bis zur Funkenstrecke zu isolieren, so daß eine direkte Berührung dieses Bereichs ausgeschlossen werden kann. Nachteilig aber ist jedoch, daß an jeder Stelle des Kabels, bei der die Isolation aufgehoben wird, weitere Schutzmaßnahmen anfallen.

Eine weitere Möglichkeit besteht darin, den Fremdspannungspegel laufend zu überwachen und bei Erreichen einer berührungsgefährlichen Spannung die Fremdspannung für die Dauer ihres Auftretens abzuschalten oder kurzzuschließen.

Im Bereich der Niederspannungstechnik sind Trennschalter, sogenannte FI-Schutzschalter bekannt, die den durch eine Fehlerspannung hervorgerufenen Fehlerstrom auswerten, um diesen zu unterbrechen. Spezielle Ausführungen derartiger Schalter, sogenannte Erdschlußwächter, überwachen den Fehlerstrom auf geerdeten Kabelschirmen und schalten einen Strom oberhalb eines Ansprechwerts ab.

Die DE 39 06 208 A1 offenbart eine Anordnung zur Wechselspannungsbegrenzung, die speziell auf kathodisch geschützte Rohrfernleitungen abgestimmt ist. Die vorbekannte Anordnung schließt Fehlerspannungen, die eine bestimmte Differenz zu einem Referenz-Erdungspunkt aufweisen, kurz.

Aus Elektropraktiker, 51/1 und 51/4, 1997, ist eine unsymmetrische Diodenschaltung bekannt, die blitzstrommäßig koordiniert mit einer Trennfunkenstrecke im Bereich der Erderkorrosion einsetzbar ist und die über gegebene Durchlaßspannungen der Dioden einen Korrosionsstrom verhindern soll. Im Bedarfsfall werden mehrere Dioden hintereinander geschaltet. Bei Spannungen oberhalb der Dioden-Durchlaßspannung, also z.B. für berührungsgefährliche Fremdspannungen, schließen die Dioden beide Polaritäten kurz.
Für eine Entkopplung der Dioden zur Funkenstrecke werden Entkopplungsspulen und zur Spannungsbegrenzung Varistoren eingesetzt. Die Stoßstromkomponente über die nachgeordneten Begrenzungselemente verursacht unabhängig von der Stromänderungsgeschwindigkeit di/dt eine Induktionsspannung, die unter bestimmten Dimensionierungsbedingungen eine Spannung über der Funkenstrecke erzeugt, die diese zum Ansprechen bringt. Danach bricht die Spannung auf die Bogenspannung der Funkenstrecke im Bereich von typischerweise 20V bis 30V zusammen, die quasi als Gleichspannung und damit nur über den Ohmschen Widerstand der Spulenwicklung als Entkopplung auf die nachgeordnete Schaltung wirkt. Um zu verhindern, daß der Ableitstrom unbeabsichtigterweise von der Funkenstrecke auf die nachfolgende Schaltungsanordnung kommutiert, darf die Bogenspannung der Funkenstrecke von den Begrenzungselementen der Nachfolgeschaltung nicht begrenzt werden. Damit sind sowohl die Varistoren als auch die Diodenanordnung so auszulegen, daß sie bis in den Bereich 30V stromundurchlässig sind. Da die Durchlaßspannung einzelner Siliziumdioden bei typischerweise 0,7V liegt, müssen hier mindestens zweimal 39 Dioden für die Antiparallelschaltung eingesetzt werden, um eine wirksame Entkopplung über den gesamten Ableitvorgang zu erreichen.
Diese hohe Anzahl von Dioden ist sehr unwirtschaftlich. Andererseits sind mögliche Schwellwerte, die eine maximale Berührungsspannung festlegen, nur über die Anzahl der Dioden einzustellen. Bei einer zulässigen Berührungsspannung von z.B. 50Veff mit Scheitelwert von ca. 70V müßten jeweils 100 derartige Dioden eingesetzt werden.

Aus dem Vorgenannten ist es daher Aufgabe der Erfindung, eine multifunktionale Überspannungs-Schutzeinrichtung, insbesondere für Blitzschutz-Potentialausgleichsund Erdungssysteme mit Kurzschluß- und/oder Strombegrenzungsmitteln anzugeben, die in der Lage ist, unterschiedliche Überspannungen verschiedenster Ursachen zu behandeln, und zwar unabhängig davon, ob es sich um transiente oder stationäre Überspannungsereignisse handelt.

Die Lösung der Aufgabe der Erfindung erfolgt mit einer Überspannungs-Schutzeinrichtung gemäß den Merkmalen des Patentanspruchs 1, wobei die Unteransprüche mindestens zweckmäßige Ausgestaltungen und Weiterbildungen umfassen.

Demnach liegt der Grundgedanke der Erfindung darin, eine ereignis- und zeitgesteuerte Kurzschließeinrichtung für Überspannungen mit einer über Funktionsblöcke hergestellten Funktionstrennung bereitzustellen, die einerseits zur Begrenzung blitzbedingter Überspannungen und der koordinierten Ableitung der Stoß-, Lang- und Folgeströme, die im Zusammenhang mit einem Blitzereignis auftreten können, sowie andererseits dafür geeignet ist, Spannungen abzubauen, die unabhängig von solchen Ereignissen als berührungsgefährliche Spannungen in beeinflußten Potentialausgleichs- und Erdungssystemen auftreten.

Hierfür ist eine Selektionsbaugruppe vorgesehen, die die zwischen den zu schützenden Systemteilen und Erde auftretenden Überspannungsereignisse nach ihrem zeitlichen Verlauf sowie Höhe der jeweiligen Spannungswerte überwacht und bewertet. Die Selektionsbaugruppe erkennt dynamische/ transiente, aber auch statische/stationäre, sich gegebenenfalls periodisch wiederholende Ereignisse und steuert je nach Ereignis entweder einen dynamischen Kurzschlußschalter oder einen statischen Kurzschlußschalter an. In einer Ausführungsform sind der dynamische und der statische Kurzschlußschalter nacheinander aktivierbar.

Erfindungsgemäß wird also der zeitliche Ablauf und die Höhe des oder der Überspannungsereignisse erkannt, um dann gezielt kurzzuschließen, indem jeweils voneinander unabhängig funktionierende, unterschiedlich spezifizierte Komponenten in unterschiedlichen Funktionsblöcken der Kurzschließeinrichtung koordiniert aktiviert werden.

Der dynamische Bereich eines transienten Überspannungsereignisses umfaßt einen Zeitbereich von im wesentlichen etwa 1,5ms. Nach dieser Zeit ist ein, etwa aus einem Blitzereignis resultierender Blitzstrom abgeklungen. Für derartige Überspannungen werden Überspannungsableiter eingesetzt, die die Überspannung kurzschließen. Beispielsweise finden hier Funkenstrecken Anwendung. Andererseits sind spannungsbegrenzende Überspannungsableiter, z.B. Varistoren, im Einsatz.

Erfindungsgemäß bildet eine dieser Funktion entsprechende Komponente einen dynamischen Kurzschlußschalter. Überschreitet der Scheitelwert einer blitzbedingten transienten Überspannung einen bestimmten Betrag, wird ereignisgesteuert oder über eine entsprechende Initialzündung der so gebildete dynamische Kurzschlußschalter aktiviert und dadurch die transiente Überspannung im Sinne der Erfindung begrenzt respektive kurzgeschlossen.

Der statische Bereich eines Überspannungsereignisses umfaßt zwei unterschiedliche Arten von Überspannungen. Eine erste bezieht sich auf den Zeitbereich eines stationären Vorgangs, der sich an den dynamischen Vorgang einer transienten Überspannung anschließt und endet, sobald die Überspannung insgesamt auf einen geringen Restwert bzw. vollständig abgeklungen ist. Eine weitere umfaßt den Zeitpunkt, bei dem ein bestimmter Spannungspegel überschritten wird, ohne daß ein dynamisches Ereignis vorausgegangen ist.

Der statische Bereich eines solchen Überspannungsereignisses, das mit oder ohne vorausgegangener dynamischer Komponente der Überspannung auftritt, wird von einem statischen Kurzschlußschalter als weiterem Funktionsblock innerhalb der erfindungsgemäßen Einrichtung erfaßt und kurzgeschlossen, sobald der Wert einer transienten Überspannung eine bestimmte Zeitdauer oder der Wert einer gleichförmigen bzw. periodisch wiederkehrenden Überspannung einen bestimmten Betrag überschreitet. Der statische Kurzschlußschalter kann von einem steuerbaren elektromechanischen oder aber elektronischen Schalter bzw. einer solchen Schalteinrichtung gebildet sein.

Wesentlich für die Erfindung ist die Unterscheidung zwischen dynamischen und statischen Anteilen eines Überspannungsereignisses. Hierdurch werden die Baugruppen dynamischer und statischer Kurzschlußschalter jeweils nur dann aktiviert, wenn entsprechende Bereiche eines Überspannungsverlaufs bzw. Ableitvorgangs, für den diese Einrichtungen spezifiziert sind, vorliegen. Mögliche Ausfälle von Komponenten des dynamischen Kurzschlußschalters durch Langzeitvorgänge nach einem transienten Überspannungsereignis, wie sie bisher in der Praxis beobachtet werden, sind damit durch die Erfindung ausgeschlossen. Gleiches gilt im umgekehrten Fall, wenn eine den statischen Kurzschlußschalter entsprechende Komponente mit dynamischen, z.B. blitzbedingten Überspannungen beaufschlagt wird. Es wird deutlich, daß sich erfindungsgemäß die Komponenten in der Art der Zusammenschaltung ergänzen und somit Ereignisse, die jeweils zur Zerstörung der Einzelkomponente führen können, im Sinne der Erfindung koordiniert und kombiniert beherrschbar sind.

Die Selektionsbaugruppe übernimmt die Koordinierung zwischen dem dynamischen und dem statischen Kurzschlußschalter über den gesamten Verlauf eines Überspannungsereignisses. Hierfür wird zwischen einem dynamischen Ereignis, das zum Ansprechen des dynamischen Kurzschlußschalters führt, und einem statischen Ereignis unterschieden, das zwar den dynamischen Kurzschlußschalter nicht anspricht, aber den Wert einer zulässigen Dauerspannung überschreitet.

Die Selektionsbaugruppe umfaßt zwei Bewertungseingänge, welche logisch ODERverknüpft über einen Steuerausgang mit dem Steuereingang des statischen Kurzschlußschalters in Verbindung stehen, wobei der erste Bewertungseingang das Ansprechen des dynamischen Kurzschlußschalters mittels Stromsensor in dessen Ableitpfad und der zweite Bewertungseingang den Spannungspegel über dem dynamischen Kurzschlußschalter überwacht.

Mit erkanntem Ansprechen des dynamischen Kurzschlußschalters nach einer vorgestellten Verzögerungszeit wird der statische Kurzschlußschalter geschlossen, um den Ableitvorgang des dynamischen Kurzschlußschalters zu unterbrechen.
Beim Erreichen oder Überschreiten eines vorbestimmten Spannungspegels wird der statische Kurzschlußschalter bis zum Abklingen geschlossen.

Wie dargelegt, erfaßt also der erste Bewertungseingang das Ansprechen des dynamischen Funktionsblocks bzw. Kurzschlußschalters über einen Stromsensor in dessen Ableitpfad und aktiviert nach einer voreingestellten Verzögerungszeit von im wesentlichen 1 bis 1,5ms den statischen Kurzschlußschalter, der einen Kurschluß der verbleibenden Überspannung bewirkt.
Durch das Zuschalten des statischen Kurzschlußschalters wird der Ableitvorgang über den dynamischen Kurzschließer, z.B. eine Trennfunkenstrecke, unterbrochen, so daß der Ableitstrom nunmehr auf den statischen Kurzschlußschalter kommutiert. Der dynamische Kurzschlußschalter, dessen Zuständigkeit nur die transienten Ereignisse betrifft, wird dadurch immer innerhalb seines spezifizierten Ableitbereichs betrieben, da der Anteil des Ableitvorgangs, der auf ihn entfällt, unabhängig vom Verlauf des Gesamtereignisses auf je nach Voreinstellung maximal 1,5ms begrenzt bleibt.

Der transienten Komponente eines Überspannungsereignisses gegebenenfalls nachfolgende stationäre, energieschwächere Ereignisse, die sich meist über längere Zeit erstrecken, werden hingegen nach Ablauf der Verzögerungszeit von der Selektionsbaugruppe koordiniert an den dynamischen Kurzschlußschalter übergeben. Solche Folgevorgänge sind z.B. Langstromkomponenten der verschiedenen normierten Blitzströme nach IEC und DIN/VDE, deren Kurschlußstrom z.B. 100A/0,5s beträgt, sowie netzfrequente Folgeströme, die ohne den Bypass durch den statischen Kurzschlußschalter zumindest eine hohe Beanspruchung des dynamischen Teils hervorrufen würden.

Der zweite Eingang der Selektionsbaugruppe erfaßt Spannungspegel oberhalb eines voreinstellbaren Schwellwerts, z.B. 50V eff, und aktiviert ohne vorangegangen Ableitvorgang über den dynamischen Kurzschlußschalter abhängig von der Spannungshöhe innerhalb der ersten drei Halbwellen den statischen Kurzschlußschalter.

Die Selektionsbaugruppe besteht vorzugsweise aus passiven Bauteilen, deren Verhalten bzw. deren Funktion durch die zu begrenzende Spannung bestimmt wird und abhängig davon in der oben beschriebenen Art die Selektion des jeweiligen Kurzschlußschalters vornimmt. Hierdurch kann eine netz- und versorgungsspannungs-unabhängige Funktion gewährleistet werden, die sich ausschließlich auf das zu begrenzende Ereignis bezieht. Durch blitzbedingte Ereignisse häufig zu verzeichnende Netzausfälle führen somit nicht zum Funktionsausfall der gesamten Baugruppe.

In den Fällen, bei denen ein erweiterter Funktionsumfang erforderlich ist, können auch aktive Elemente verwendet werden, die über die beschriebenen Grundfunktionen weitere Aufgaben erfüllen. Ein solcher erweiterter Funktionsumfang kann eine Überwachungs- und Signalisierungseinrichtung sein, die z.B. Fehlerzustände der Kurzschlußschalter erfaßt und diese optisch oder akustisch anzeigt bzw. über eine geeignete Schnittstelle fernmeldet, wofür auch eine telemetrische Übertragung in Frage kommt.

Zusammenfassend geht die multifunktionale Überspannungs-Schutzeinrichtung von einer Selektionsbaugruppe aus, die die zwischen dem zu schützenden Systemteil und Erde auftretenden Überspannungsereignisse nach ihrem zeitlichen Verlauf sowie der Höhe der jeweiligen Spannungswerte überwacht und bewertet. Hierdurch gelingt es, dynamische/ transiente, aber auch statische/stationäre, auch periodisch wiederkehrende Ereignisse zu erkennen, wobei je nach Ereignis ein dynamischer Kurzschlußschalter oder ein statischer Kurzschlußschalter, gegebenenfalls diese nacheinander, aktiviert werden. Der dynamische Kurzschlußschalter ist ein spannungsbegrenzender oder spannungsschaltender Überspannungsableiter, z.B. ein Varistor oder eine Funkenstrecke. Als statischer Kurzschlußschalter wird ein elektromechanischer oder elektronischer Schalter, z.B. ein Halbleiterschalter eingesetzt. Der statische Kurzschlußschalter wird dann aktiviert, wenn der Wert einer transienten Überspannung eine vorbestimmte Zeitdauer oder der Wert einer gleichförmigen oder periodisch wiederkehrenden Überspannung einen vorbestimmten Betrag überschreitet.

Die Erfindung soll nachstehend anhand eines Ausführungsbeispiels sowie unter Zuhilfenahme von Figuren näher erläutert werden.

Hierbei zeigen:
- Fig. 1: zeitliche Grenzwerte von Berührungsspannungen nach E DIN VDE 0805 bzw. E DIN IEC74/484/CDV durch möglich, transiente, temporäre oder stationäre Störbeeinflussungen;
- Fig. 2: ein Blockschaltbild der multifunktionalen Schutzeinrichtung;
- Fig. 3: den Spannungs- bzw. Strom-Zeitverlauf des Ableit- und Begrenzungsvorgangs unter Verwendung der erfindungsgemäßen Überspannungs-Schutzeinrichtung bei transienten Ereignissen;
- Fig. 4: den Ableit- und Begrenzungsvorgang bei temporären bzw. stationären Ereignissen bei Überschreiten eines vorbestimmbaren Grenzwertes, wobei in

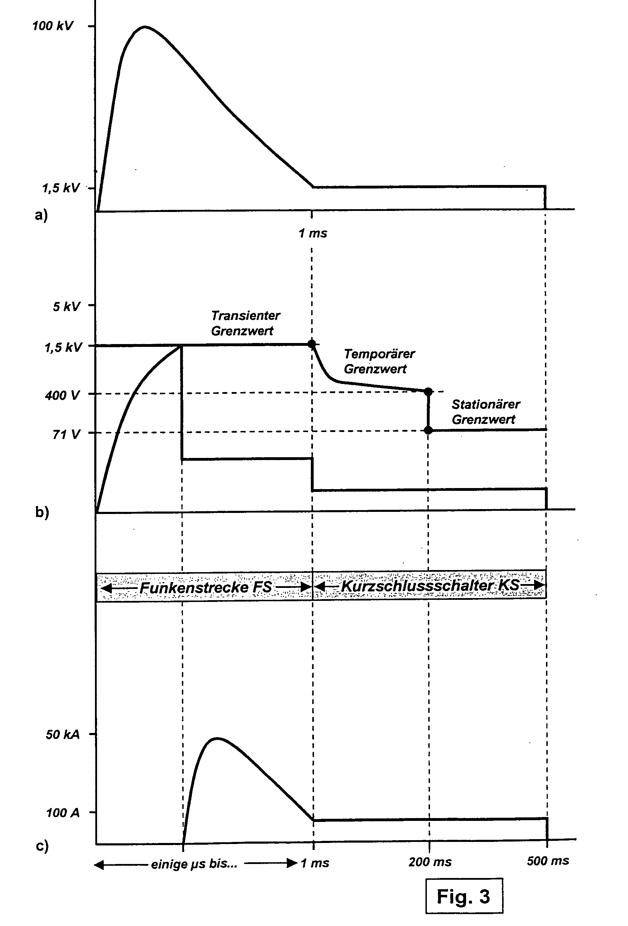

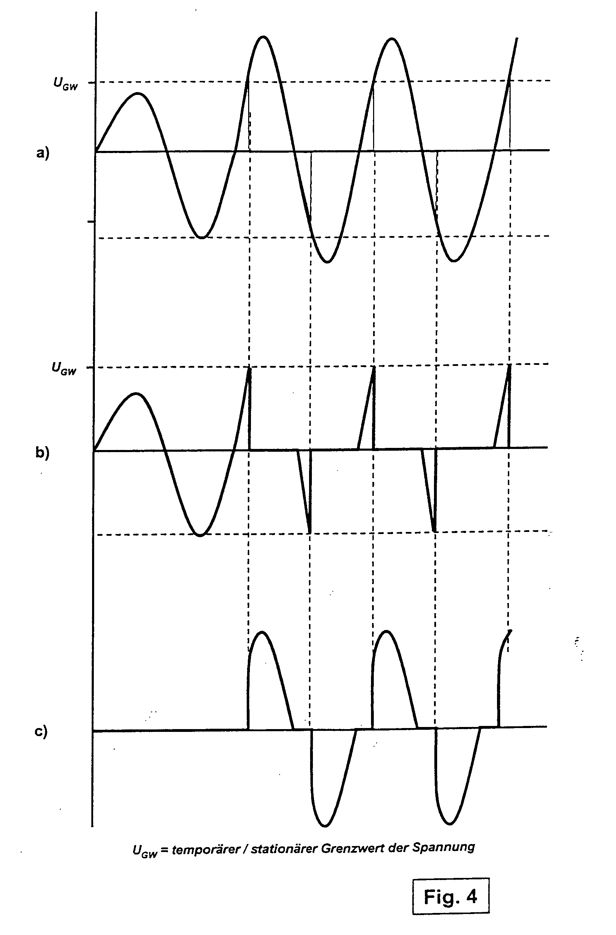

- Fig. 3a/4a: jeweils der unbeeinflusste Verlauf der Störgröße sowie

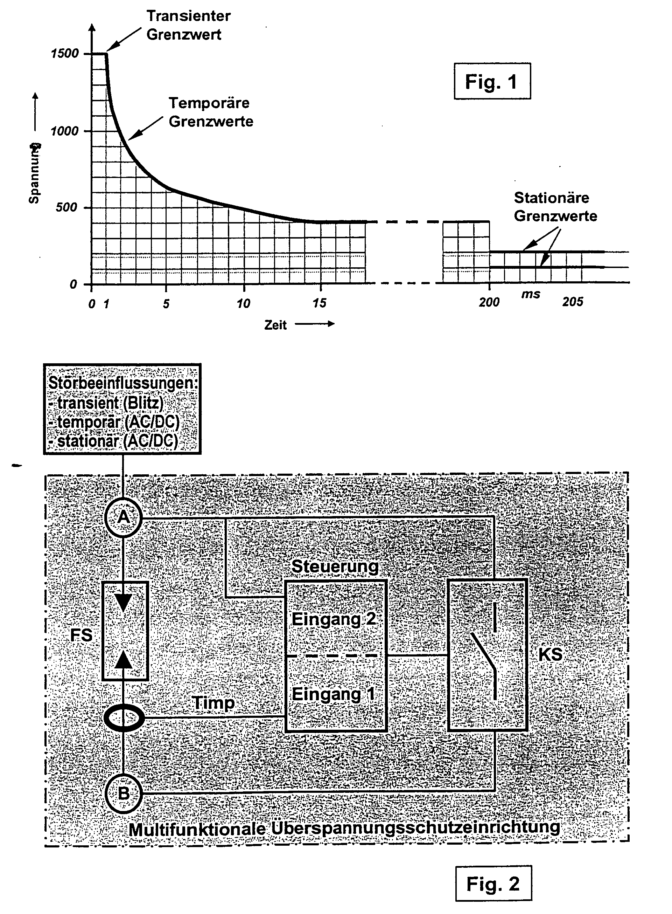

- Fig. 3b/4b: jeweils die Begrenzung der Störgröße, die sich zwischen den Anschlüssen A/B in Fig. 2 einstellt, sobald der jeweilige Grenzwert der transienten, der temporären oder der stationären Störgröße überschritten wird dargestellt ist und
- Fig. 3c/4c: den Stromverlauf bezogen auf Fig. 3b/4b.

Beim Blockschaltbild gemäß Fig. 2 wird von einer Überspannungs-Schutzeinrichtung ausgegangen, die einen dynamischen Kurzschlußschalter FS, z.B. in Form einer Trennfunkenstrecke, und einen statischen Kurzschlußschalter KS, z.B. in Form eines Halbleiterschalters aufweist. Die Selektionsbaugruppe, welche mit Steuerung bezeichnet ist, besitzt einen ersten Eingang, der mit einem Stromsensor, beispielsweise nach Art eines Impulstransformators Timp in Verbindung steht. Ein zweiter Eingang erfaßt die Spannung zwischen den Anschlußpunkten A und B und stellt fest, ob ein vorgegebener Spannungsbegrenzungswert, z.B. 50V, überschritten wird.

Eine erste Ansteuerung des statischen Kurzschlußschalters KS erfolgt über den erwähnten Impulstransformator Timp, der, wie erwähnt, als Stromsensor im Ableitpfad des dynamischen Kurzschlußschalters angeordnet ist. Sobald der dynamische Kurzschlußschalter angesprochen hat, wird über einen Impuls Timp des Sensors der erste Steuereingang (Eingang 1) respektive der statische Kurzschlußschalter aktiviert. Zu diesem Zeitpunkt liegt zwischen den Anschlußpunkten A/B nunmehr bereits die Restspannung des spannungsbegrenzenden oder spannungsschaltenden dynamischen Kurzschlußschalters FS an, die sich als Folge des Ableitvorgangs anstelle der ursprünglichen Überspannung einstellt. Nach Ablauf einer eingestellten Verzögerungszeit wird der statische Kurzschlußschalter KS aktiviert, so daß die Restspannung über dem dynamischen Kurzschlußschalter FS vom statischen Kurzschlußschalter KS kurzgeschlossen wird und der gesamte, aus dem Überspannungsereignis resultierende Strom auf diesen kommutiert.

Eine weitere Aktivierung des statischen Kurzschlußschalters KS erfolgt ohne vorgelagerte transiente Überspannung bzw. Ansprechen des dynamischen Kurzschlußschalters FS über den zweiten Eingang (Eingang 2), der die Spannung zwischen den Anschlußpunkten A/B ständig dahingehend überwacht, ob ein bestimmter vorgegebener Spannungswert überschritten ist.

Der statische Kurzschlußschalter KS kann als ein elektromagnetisch betätigter Schalter oder aber auch, wie erwähnt, als Halbleiterschalter ausgeführt sein. Die Verwendung eines Halbleiterschalters ist deshalb von Vorteil, da dieser leistungslos angesteuert werden kann, so daß der Kurzschließer ohne zusätzliche Hilfsenergie betreibbar ist.

In den Figuren nicht dargestellte Teile der Schaltung der Einrichtung nach Fig. 2 haben die Aufgabe, den dynamischen Teil und den statischen Teil der Überspannung zwischen dem dynamischen und statischen Kurzschlußschalter zu entkoppeln, so daß der dynamische Anteil nur mit reduzierten Parametern am statischen Kurzschlußschalter auftritt. Dieser Schaltungsteil kann z.B. aus einer Induktivität mit nachgeschaltetem Überspannungsableiter, vorzugsweise Varistorableiter bestehen. Eine weitere Ausführungsform besteht darin, den dynamischen Kurzschlußschalter als Trennfunkenstrecke zu realisieren, die mit einer Zündelektrode versehen ist und die über einen Zündimpuls von einer Impulsauswerteschaltung in der Selektionsbaugruppe gezündet wird, sobald ein entsprechendes Ereignis eintritt.

Fig. 3 beschreibt den prinzipiellen Verlauf eines Ableit- und Begrenzungsvorgangs der Überspannungs-Schutzeinrichtung gemäß Ausführungsbeispiel, die mit einer fiktiven Stoßüberspannung, wie im Bildteil 3a dargestellt, beaufschlagt wird. Bildteil 3b beschreibt den Spannungsverlauf zwischen den Punkten A/B gemäß Fig. 2, Teil 3c den dazugehörigen Stromverlauf. Aus den Fig. 3b und 3c ist die funktionale Trennung zwischen einer Funkenstrecke als dynamischer Kurzschlußschalter und einem Triac als statischer Kurzschlußschalter zu entnehmen. In der Fig. 3b wurde zusätzlich der Grenzwertverlauf der zulässigen Überspannung nach E DIN IEC 74/484/CDV eingetragen.

Die Darstellungen nach Fig. 4 beschreiben den Ableit- und Begrenzungshergang der Überspannungs-Schutzeinrichtung bei einer fiktiven Wechselspannung oberhalb eines Grenzwertes U_{GW}. Hierbei stellt Fig. 4a auf den unbeeinflußten Verlauf ab, wie er sich ohne Kurzschlußschalter einstellt. Fig. 4b zeigt den Begrenzungsverlauf, der dann gegeben ist, wenn der Kurzschlußschalter zwischen den Anschlüssen A/B aktiv wird, sobald der Wert von U_{GW}, d.h. z.B. der Scheitelwert einer 50Veff Spannung, überschritten ist. Fig. 4c stellt den zugehörigen Stromverlauf graphisch dar.

Die Überspannungs-Schutzeinrichtung gemäß Ausführungsbeispiel ist als eine ereignis- und zeitgesteuerte Kurzschließeinrichtung von Überspannungen mit einer über Funktionsblöcke hergestellten Funktionstrennung realisiert, die einerseits zur Begrenzung blitzbedingter Überspannungen und der koordinierten Ableitung der Stoß-, Lang- und Folgeströme, die im Zusammenhang mit einem Blitzereignis auftreten können, dient, und die andererseits in der Lage ist, Spannungen, die unabhängig von solchen Ereignissen als berührungsgefährliche Spannungen in beeinflußten Potentialausgleichs- und Erdungssystemen auftreten, über eine selektive Steuereinrichtung zu bewerten und hiernach durch einen Kurzschluß auf einen ungefährlichen Wert zu begrenzen, bis die Überspannung abgeklungen ist.

## Patentansprüche

1. Multifunktionale Überspannungs-Schutzeinrichtung, insbesondere für Blitzschutz-Potentialausgleichs- und Erdungssysteme mit Kurzschluß- und/oder Strombegrenzungsmitteln,
**gekennzeichnet durch**
eine von einer Netz- und Versorgungsspannung unabhängige Selektionsbaugruppe, die die zwischen dem zu schützenden Systemteil und Erde auftretenden Überspannungsereignisse nach ihrem zeitlichen Verlauf sowie Höhe der jeweiligen Spannungswerte überwacht und bewertet, um dynamische / transiente einerseits und statische / stationäre, auch periodisch wiederkehrende Ereignisse andererseits zu erkennen, wobei je nach Ereignis ein dynamischer Kurzschlußschalter oder statischer Kurzschlußschalter, gegebenenfalls diese nacheinander, aktiviert wird bzw. werden.

2. Multifunktionale Überspannungs-Schutzeinrichtung nach Anspruch 1,
**dadurch gekennzeichnet, daß**
der dynamische Kurzschlußschalter ein spannungsbegrenzender oder spannungsschaltender Überspannungsableiter ist.

3. Multifunktionale Überspannungs-Schutzeinrichtung nach Anspruch 2,
**dadurch gekennzeichnet, daß**
ein Varistor oder eine Funkenstrecke eingesetzt ist.

4. Multifunktionale Überspannungs-Schutzeinrichtung nach einem der vorangegangenen Ansprüche,
**dadurch gekennzeichnet, daß**
der statische Kurzschlußschalter ein elektromechanischer oder ein elektronischer Schalter ist.

5. Multifunktionale Überspannungs-Schutzeinrichtung nach Anspruch 4,
**dadurch gekennzeichnet, daß**
ein Halbleiterschalter eingesetzt ist.

6. Multifunktionale Überspannungs-Schutzeinrichtung nach einem der vorangegangenen Ansprüche,
**dadurch gekennzeichnet, daß**
der statische Kurzschlußschalter dann aktiviert ist, wenn der Wert einer transienten Überspannung eine vorbestimmte Zeitdauer oder der Wert einer gleichförmigen oder periodisch wiederkehrenden Überspannung einen vorbestimmten Betrag überschreitet.

7. Multifunktionale Überspannungs-Schutzeinrichtung nach einem der vorangegangenen Ansprüche,
**dadurch gekennzeichnet, daß**
die Selektionsbaugruppe zwei Bewertungseingänge umfaßt, welche logisch ODERverknüpft über einen Steuerausgang mit dem Steuereingang des statischen Kurzschlußschalters in Verbindung stehen, wobei der erste Bewertungseingang das Ansprechen des dynamischen Kurzschlußschalters mittels Stromsensor in dessen Ableitpfad und der zweite Bewertungseingang den Spannungspegel über dem dynamischen Kurzschlußschalter überwacht.

8. Multifunktionale Überspannungs-Schutzeinrichtung nach Anspruch 7,
**dadurch gekennzeichnet, daß**
mit erkanntem Ansprechen des dynamischen Kurzschlußschalters nach einer voreingestellten Verzögerungszeit der statische Kurzschlußschalter geschlossen wird, um den Ableitvorgang des dynamischen Kurzschlußschalters zu unterbrechen.

9. Multifunktionale Überspannungs-Schutzeinrichtung nach Anspruch 7,
**dadurch gekennzeichnet, daß**
die Verzögerungszeit im Bereich von im wesentlichen 1 bis 1,5ms liegt.

10. Multifunktionale Überspannungs-Schutzeinrichtung nach Anspruch 7,
**dadurch gekennzeichnet, daß**
beim Erreichen oder Überschreiten eines bestimmten Spannungspegels der statische Kurzschlußschalter bis zum Abklingen geschlossen wird.

11. Multifunktionale Überspannungs-Schutzeinrichtung nach Anspruch 7,
**dadurch gekennzeichnet, daß**
der Stromsensor als im Ableitpfad des dynamischen Kurzschlußschalters angeordneter Impulstransformator ausgebildet ist.
